Europäisches Patentamt

(19) European Patent Office

Office européen des brevets

(11) Publication number: **0 381 454**
**A1**

## (12) EUROPEAN PATENT APPLICATION

(21) Application number: **90300965.2**

(22) Date of filing: **30.01.90**

(51) Int. Cl.⁵: **C09D 133/00, C09D 191/06, C09J 7/00, B32B 27/00**

(30) Priority: **30.01.89 US 303897**

(43) Date of publication of application:
**08.08.90 Bulletin 90/32**

(84) Designated Contracting States:
**AT BE CH DE DK ES FR GB GR IT LI LU NL SE**

(71) Applicant: **MOBIL OIL CORPORATION**
**150 East 42nd Street**
**New York New York 10017(US)**

(72) Inventor: **Chu, Shaw Chang**
**19 Saratoga Drive**
**Cranberry, New Jersey 08512(US)**
Inventor: **Kirk, Kevin Anthony**
**6025, Barberry Lane**
**Macedon, New York 14502(US)**

(74) Representative: **Colmer, Stephen Gary et al**
**Patent Department c/o Mobil Services**
**Company Limited Mobil Court 3 Clements**
**Inn**
**London WC2A 2EB(GB)**

(54) **Low coefficient of friction material and plastic films coated therewith.**

(57) A coating for a thermoplastic film includes an acrylic copolymer, a finely divided wax in the amount of 30 to 150%, preferably 30 to 60%, by weight based on the total weight of the copolymer, a finely divided inorganic solid selected from the group consisting of silica, diatomaceous earth, calcium silicate, bentonite and finely divided clays in the amount of 5 to 25% by weight based on the total weight of the copolymer and either talc or Syloid in the amount of 0 to 1% based on the total weight of the copolymer. The coated film has a low haze, non-blocking and consistently low coefficient of friction for good machinability. The coating is applied to a surface of the film as an aqueous dispersion preferably by a gravure coater placed between the machine direction orienter and the transverse direction orienter in an extruding system for the film. Tilis film can be laminated to another film such as glassine or a plastic film.

EP 0 381 454 A1

## LOW COEFFICIENT OF FRICTION MATERIAL AND PLASTIC FILMS COATED THEREWITH

THIS INVENTION relates to coating compositions; more particularly, this invention relates to coating compositions which when applied to plastics films result in film structures having low haze, non-blocking and consistently low coefficient of friction (COF) for good machinability. The present invention also relates to coated plastics films and, to processes for applying the composition to a surface of the plastics film.

Polypropylene films are widely used in the packaging industry because of their superior physical properties, such as high stiffness, excellent optical clarity, and good moisture barrier characteristics. However, unmodified polypropylene has the disadvantages of having a high inherent COF and film-to-film destructive blocking on storage. The COF characteristics of polypropylene and other thermoplastic films can be beneficially modified by the inclusion in the polymer of fatty acid amides. However, effectiveness of the amides relies upon their ability to migrate to the surface of the films; accordingly, the value of the COF is subject to wide variation depending upon the thermal history which the film experiences during shipping, storage, and certain converting processes. In addition, the presence of such amides on the film surfaces can adversely affect the film's appearance as manifested by an increase in haze, a decrease in gloss and the presence of streaks. The presence of such amides on the surface can also adversely affect the wettability and adhesion of solvent and water-based inks, coatings, and adhesives.

It is also known to provide a multi-layer film comprising a comparatively thick base layer of an optically clear thermoplastic resin and a comparatively thin surface layer containing a finely divided inorganic material in a proportion sufficient thereby to impart anti-block characteristics and decrease film-to-film COF. The resulting film has non-blocking and improved slip characteristics which do not materially vary with thermal history and are obtained without any adverse of the effects on appearance, wetting and adhesion typically experienced with amide-modified films. However, when laminated to other films, for example glassine paper, such films exhibit significantly higher COF values and do not perform flawlessly on convention form, fill and seal machines.

This invention seeks to provide a coated plastics film in which the above-mentioned disadvantages are ameliorated.

In accordance with one aspect of this invention, there is provided a coating composition, suitable for a plastics film, which composition comprises:

(i) a (meth)acrylic copolymer;

(ii) from 30 to 150% by weight of (i) of a finely-divided wax;

(iii) from 5 to 25% by weight of (i) of a finely-divided solid comprising silica, diatomaceous earth, calcium silicate, clay, or a mixture thereof; and

(iv) from 0 to 1% by weight of (i) of talc or silica gel.

This invention also provides a plastics film having a coating on and adhered to at least one surface thereof, the coating comprising a composition as herein defined.

This invention further provides a process for the preparation of a coated plastics film as herein defined, which process comprises:

providing a coating composition as herein defined; and

applying the coating material to a surface of a plastics film.

The present invention also provides the use of a coating composition as herein defined to provide laminatable film with low coefficient of friction.

The coating composition when applied to a suitabe substrate film has the improved properties of low haze, excellent non-blocking and a consistently low coefficient of friction. The film has these properties even when laminated to another film, such as glassine or a plastic film.

As used herein, the term "(meth)acrylic copolymer" means a copolymer comprising acrylic or methacrylic residues or acrylic and methacrylic residues.

The coating composition of the present invention is composed of a (meth)acrylic copolymer (i), a finely-divided wax (ii), a finely divided inorganic solid material (iii), and optionally, a small amount of either talc or Syloid (a proprietary silica gel) (iv).

The (meth)acrylic copolymer (i) suitably comprises an $\alpha$, $\beta$-monoethylenically unsaturated carboxylic acid, preferably comprising acrylic acid, methacrylic acid or a mixture thereof, and the neutral monomer suitably comprises an ester, preferably comprising an alkyl acrylate, an alkyl methacrylate or a mixture thereof. A particularly preferred acrylic copolymer and its preparation is described in U.S. Patent No. 3,753,769. It is preferred that the unsaturated carboxylic acid is present in the copolymer in the amount of 2 to 20 parts by weight, and the neutral monomer is present in the amount of 98 to 80 parts by weight.

The finely-divided wax (ii) may be a natural wax, such as paraffin wax, microcrystalline wax, beeswax, carnauba wax, japan wax or montan wax; or a synthetic wax, such as a hydrogenated castor oil, chlorinated hydrocarbon wax, or a long chain fatty acid amide. The wax is preferably present in the amount of 30 to 60% by weight based on the total weight of the acrylic copolymer.

The finely-divided inorganic solid (iii) may comprise, as clay, bentonite. The talc or Syloid is present in the amount of 0 to 1% by weight based on the total weight of the acrylic copolymer.

The coated plastics film of this invention is suitably a thermoplastics film, preferably a film comprising a polyolefin, especially polypropylene. Desirably, the film is oriented.

The coating composition of the present invention can be applied to the surface of a film material in any convenient and known manner, such as by gravure coating, roll coating, dipping, or spraying. However, it is preferable to apply it by a gravure coater which can be positioned between the machine direction (MD) orienter and the transverse direction (TD) orienter in an extruding system for the film. Also, the surface of the film is preferably treated to ensure that the coating will be strongly adherent to the film. This treatment may be accomplished by employing known prior art techniques, such as film chlorination, that is, exposure of the film to gaseous chlorine; treatment with oxidizing agents such as chromic acid; hot air or steam treatment; or flame treatment. However, a particularly desirable method of treatment has been found to be the so called electronic treatment which comprises exposing the film surface to a high voltage corona discharge while passing the film between a pair of spaced electrodes. After electronic treatment of the substrate film surface, it may be coated with the coating composition of the present invention which coating will then exhibit a tendency to more strongly adhere to the treated film surface.

It is possible to add the coating composition of the present invention onto the surface of the treated film substrate from a non-aqueous solution of the composition using, for example, various organic solvents such as alcohols, ketones, and esters. However, since the coating compositions of the present invention contain colloidal inorganic materials and since such materials are difficult to keep well dispersed in organic solvents, it is preferable that the coating compositions of the present invention be applied from aqueous media and preferably from an alkaline aqueous solution thereof.

The following Examples illustrate the invention.

## EXAMPLE I

An aqueous coating dispersion was prepared in a 5 liter flask by mixing the following ingredients:

|  | Parts by weight |
| --- | --- |
| Deionized water | 680 |
| Acrylic Emulsion (33.5%) | 1,300 |
| Aqueous Ammonia (7.36%) | 20 |
| Ludox Silica Dispersion (20%) | 218 |
| Carnauba Wax Emulsion (20%) | 784 |
| Talc (5%) | 87 |

THe acrylic emulsion ws supplied by Valspar Corporation and was a copolymer of 51.5% methyl methacrylate, 44.5% methyl acrylate, and 4.0% methylacrylic acid. The coating dispersion had a solids content of 20.7%, a pH of 8.0, and viscosity (Brookfield) of 20 centipoise.

The coating dispersion was placed in a gravure coater which had been installed between the orienter and the TD orienter of a pilot scale film orienter.

Polypropylene resin (Fina 828) was extruded through a flat sheet die at 250°C, cast onto a cooling drum and quenched at 30°C. The sheet, about 30 mil thick, was reheated to 140°C and stretched 5 fold in the MD, then corona treated for improved surface wettability. When passing through the gravure coater, the MD oriented film web, now about 6 mil thick, was coated with the coating dispersion. The coated web was dried in pre-heat zones at 160°C, then stretched 8 fold in the TD orienter at 145°C and annealed at 160°C. The biaxially stretched film, measured 0.75 mil thick, was corona treated on the uncoated side to improve the wettability and adhesion of ink and adhesives that might be applied later on. The coated film had the following properties:

EP 0 381 454 A1

| COF | 0.15-0.40 |
| Blocking | < 5g/inch |
| Haze | $\leq 2.5\%$ |
| Gloss at 45° | $\geq 80$ |
| Coating Weight | 0.1-0.4 mg/in$^2$ |

## EXAMPLE 2

A series of coating compositions were prepared in the same manner as described in EXAMPLE 1. In these compositions, the weight percentage of the silica, wax, and talc were varied as shown in TABLE 1.

### TABLE 1

| Sample | Acrylic | Silica | Wax | Talc | COF |
|--------|---------|--------|-----|------|-----|
| 2 | 100 | 10 | 36 | 0.25 | 0.28 |
| 3 | 100 | 10 | 40 | 0.25 | 0.21 |
| 4 | 100 | 10 | 40 | 1.0 | 0.27 |
| 5 | 100 | 10 | 45 | 0.25 | 0.18 |
| 6 | 100 | 10 | 45 | 1.0 | 0.20 |
| 7 | 100 | 10 | 50 | 1.0 | 0.19 |
| 8 | 100 | 20 | 50 | 1.0 | 0.23 |
| 9 | 100 | 10 | 55 | 1.0 | 0.18 |
| 10 | 100 | 10 | 60 | 1.0 | 0.18 |

The COF of each of these samples is shown in TABLE 1 and was measured from coated films with similar coating weights of about 0.2 mg/in$^2$.

## EXAMPLE 3

The control coating compositions shown in TABLE 2 were made under the same conditions as described in EXAMPLE 1:

### TABLE 2

| Sample | Acrylic | Silica | Wax | Talc | Comments |
|--------|---------|--------|-----|------|----------|
| A | 100 | 40 | 9 | 0.1 | Very hazy film and unacceptable COF (0.60) |
| B | 100 | 10 | 9 | 0.25 | Very clear film but unacceptable COF (0.58) |
| C | 100 | 10 | 18 | 0.25 | Very clear film but unacceptable COF (0.49) |

The composition of Sample A was a heat seal coating based on the coatings described in U.S. Patent No. 3,753,769.

## EXAMPLE 4

4

The slip coated films obtained from EXAMPLE 1, hereinafter referred to as Sample 1, Samples 3, 4 and 8 of EXAMPLE 2, Sample B of EXAMPLE 3, and two additional control Samples were extrusion laminated by means of a low density polyethylene adhesive to a 1.6 mil thick glassine paper and tested on Miro-Pak Miramatic Model L vertical form, fill and seal packaging machine and the results are given in TABLE 3.

TABLE 3

| Sample | COF | FOFC (lbs) |
|---|---|---|
| 1 | 0.16 | 15 |
| 3 | 0.21 | 19 |
| 4 | 0.20 | 20 |
| 8 | 0.13 | 16 |
| B | 0.60 | 45 |
| 75 LCM-W | 0.21 | 34 |
| 410 LCM | 0.20 | 20 |

Sample 75 LCM-W was a commercial slip film based on U.S. Patent No. 4,618, 527, and Sample 410 LCM was a commercial slip film based on eracamide as a sole slip agent.

For practical commercial packaging applications, the force over the forming collar (FOFC should be less than 30 lbs. for a supported film. Otherwise, the film will risk machine downtime because of machine jamming and high squeal noise. Samples 1, 3, 4 and 8 made in accordance with the present invention all had FOFC values well below 30 lbs. and therefore they can be used satisfactorily on the packaging machinery with high reliability.

It can be seen from EXAMPLES 1 and 2 that all of the coating compositions of the present invention had low COF. When comparing the compositions of EXAMPLES 1 and 2 with those of the control compositions in EXAMPLE 3, which had much higher COFs, it can be seen that the compositions of the present invention contains a much higher amount of the wax. This high content of the wax greatly reduces the COF. However, as can be seen from EXAMPLE 1, the high content of wax does not adversely affect the blocking characteristics, haze or gloss of the material. Thus, there is provided by the present invention coating compositions which when applied to a thermoplastic film have much lower COFs yet have good blocking characteristics, good haze and good gloss characteristics. In addition, when the coated film of the present invention is laminated with another material, such as glassine, it maintains its low COF and has good characteristics for use in form, fill and seal packaging machinery.

## Claims

1. A coating composition, suitable for a platics film, which composition comprises:
   (i) a (meth)acrylic copolymer;
   (ii) from 30 to 150% by weight of (i) of a finely-divided wax;
   (iii) from 5 to 25% by weight of (i) of a finely-divided solid comprising silica, diatomaceous earth, calcium silicate, clay or a mixture thereof; and
   (iv) from 0 to 1% by weight of (i) of talc or silica gel.

2. A coating composition according to claim 1, in which the (meth)acrylic copolymer comprises an $\alpha$, $\beta$-monoethylenically unsaturated carboxylic acid and a neutral monomer.

3. A coating composition according to claim 2, in which the unsaturated carboxylic acid is present in the copolymer in the amount of 2 to 20 parts by weight, and the neutral monomer is present in the amount of 98 to 80 parts by weight.

4. A coating composition according to any preceeding claim in which the unsaturated carboxylic acid comprises acrylic acid, methacrylic acid or a mixture thereof.

5. A coating composition according to any preceeding claim in which the neutral monomer comprises an ester.

6. A coating composition according to claim 5 in which the ester comprises an alkyl acrylate, an alkyl methacrylate or a mixture thereof.

7. A coating composition according to any preceeding claim in which the wax is present in the amount of 30 to 60% by weight based on the total weight of the acrylic copolymer.

8. A coating composition according to any preceeding claim in which the wax comprises carnauba wax.

9. A coating composition according to any preceeding claim in which the inorganic solid comprises silica.

10. A plastics film having a coating on and adhered to at least one surface thereof, the coating comprising a composition as defined in any preceeding claim.

11. A coated plastics film according to claim 10 in which the film is a thermoplastic film.

12. A coated plastics film according to claim 11 in which the film comprises a polyolefin.

13. A coated plastics film according to claim 12 in which the polyolefin comprises polypropylene.

14. A coated plastics film according to any of claims 10 to 13 in which the film is oriented.

15. A process for the preparation of a coated plastics film according to any of claims 10 to 14, which process comprises: providing a coating composition as defined in any of claims 1 to 9; and
applying the coating material to a surface of a plastics film.

16. A process according to claim 15 in which the coating composition is provided as an aqueous dispersion.

17. A process according to claim 15 or 16 in which, after the coating composition is applied to the film, it is heated to dry it.

18. A process according to claim 5, 16 or 17 in which the coating composition is applied to the film by a gravure coater.

19. A process according to any of claims 15 to 18 in which the film is oriented in the machine direction; the coating material is applied to the film; and then the coated film is oriented in the transverse direction.

20. A process according to any of claims 15 to 19 in which, prior to applying the coating composition to the film, the surface of the film is treated to improve its wettability.

21. A process according to claim 20 in which the treatment comprises subjecting the surface to a corona discharge.

22. A process according to any of claims 15 to 20 in which the coated film is laminated to another material in film or sheet form.

23. Use of a coating composition according to any of claims 1 to 9 to provide laminatable thermoplastic film with low coefficient of friction.

| DOCUMENTS CONSIDERED TO BE RELEVANT | | | EP 90300965.2 |
|---|---|---|---|
| **Category** | Citation of document with indication, where appropriate, of relevant passages | Relevant to claim | CLASSIFICATION OF THE APPLICATION (Int. Cl.⁵) |
| A | EP - A2 - 0 297 902 (MOBIL OIL CORPORATION) * Claims; page 6, lines 23-27 * | 1 | C 09 D 133/00 C 09 D 191/06 C 09 J 7/00 B 32 B 27/00 |
| D,A | US - A - 3 753 769 (STEINER) * Claims * | 1,12 | |
| | | | **TECHNICAL FIELDS SEARCHED (Int. Cl.⁵)** |
| | | | C 09 D C 09 J B 32 B |
| | The present search report has been drawn up for all claims | | |

| Place of search | Date of completion of the search | Examiner |
|---|---|---|
| VIENNA | 19-03-1990 | PAMMINGER |